Europäisches Patentamt

European Patent Office

Office européen des brevets

(19)

(11) Veröffentlichungsnummer: **0 283 978**

**A1**

(12) **EUROPÄISCHE PATENTANMELDUNG**

(21) Anmeldenummer: 88104434.1

(22) Anmeldetag: 19.03.88

(51) Int. Cl.4: **C02F 1/42 , B01J 39/14**

(30) Priorität: 25.03.87 DE 3709860

(43) Veröffentlichungstag der Anmeldung:
28.09.88 Patentblatt 88/39

(84) Benannte Vertragsstaaten:
**AT BE CH DE ES FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Gode, Peter, Dr.**
**Kronprinzstrasse 153 a**
**D-4018 Langenfeld(DE)**
Erfinder: **Guhl, Walter, Dr.**
**Wiedenhofer Strasse 27**
**D-5657 Haan(DE)**
Erfinder: **Fanenbruck, Walter**
**Am Falder 85**
**D-4000 Düsseldorf 13(DE)**
Erfinder: **Pittermann, Wolfgang Dr.**
**Schwarzbachstrasse 33**
**D-4000 Düsseldorf 12(DE)**
Erfinder: **Wichelhaus, Winfried, Dr.**
**Stifterstrasse 3**
**D-4020 Mettmann(DE)**

(54) **Verwendung von ionenaustauschenden Mineralstoffgemischen zur Wasserpflege.**

(57) Gemische von ionenaustauschendem Natriumzeolith (Zeolith NaA) und feinteiligem Calciumhydroxid werden zur Reinigung bzw. Reinhaltung von stehenden oder mäßig bewegten Gewässern, wie z. B. Gartenteichen, Schwimmbädern, Aquarien, insbesondere zur Beseitigung bzw. Verhinderung von Algenwachstum verwendet.

EP 0 283 978 A1

## "Verwendung von ionenaustauschenden Mineralstoffgemischen zur Wasserpflege"

Die Erfindung beschreibt eine neue Möglichkeit zur Reinigung und/oder Reinerhaltung von stehenden, bewegten und/oder mäßig durchströmten Gewässern, die insbesondere dem Zutritt von Luft und Licht ausgesetzt sind. Es ist bekannt, daß die Pflege solcher Gewässer beträchtliche Schwierigkeiten bereiten kann - je nach Anforderungen, die an den Wasserzustand gestellt werden. Stehende oder nur mäßig durchströmte Gewässer etwa von der Art der Fischaquarien oder Fischteiche, der Garten-oder sonstigen Zierteiche aber auch natürliche stehende oder nur mäßig durch strömte Gewässer sind insbesondere dem Problem der unerwünschten Algenbildung unterworfen. Die Reinerhaltung des Wassers auf rein biologischem Wege ist eine komplexe Aufgabe, die in vielen Fällen nicht nachhaltig verwirklicht werden kann. Erschwert wird die Problematik, wenn eine erhöhte Belüftung beispielsweise durch Springbrunnen vorgesehen ist, die zu einer Förderung des Algenwachstums führen kann.

Gegenstand der älteren internationalen Patentanmeldung PCT/EP86/00600 (WO87/01965) ist ein Verfahren zur Wasserbehandlung d.h. zur Behandlung von Trinkwasser und Brauchwasser beziehungsweise Abwasser, bei dem man feinteiliges Calciumhydroxid und feinteiligen ionenaustauschenden Natrium-Zeolith in dem Wasser suspendiert und bis zum Abklingen der Behandlungsvorgänge suspendiert hält und dann das behandelte Wasser nach dem Absetzenlassen der suspendierten

Teilchen durch Dekantieren beziehungsweise Filtrieren gewinnt. Als feinteiliger Natriumzeolith wird insbesondere Zeolith NaA verwendet, der heute großtechnisch hergestellt und beispielsweise in Textilwaschmitteln in breitem Umfange eingesetzt wird.

Die Erfindung geht von der überraschenden Feststellung aus, daß Wirkstoffgemische wie sie in der genannten älteren Anmeldung beschrieben sind, auch und zwar ganz besonders geeignet sind, bei der Pflege von stehenden, bewegten und/oder mäßig durch-strömten Gewässern wünschenswerte Verbesserungen zu liefern.

Gegenstand der Erfindung ist dementsprechend die Verwendung von feinteiligem ionenaustauschenden Natriumzeolith gemeinsam mit feinteiligem Calciumhydroxid zur Reinigung und/oder Reiner haltung von stehenden, bewegten und/oder mäßig durchströmten Gewässern, die insbesondere dem Zutritt von Licht und gegebenenfalls Luft ausgesetzt sind. Die Lehre der Erfindung erfasst insbesondere die Wasserbehandlung im Rahmen der Aquaristik, der Pflege von Fischteichen, der Reinigung und/oder Reiner haltung von Gartenteichen, Schwimmbädern und anderen künstlichen Gewässern aber auch die Pflege von natürlichen stehenden oder nur mäßig durchströmten Gewässern.

Es hat sich gezeigt, daß insbesondere bestehendes und hier insbesondere planktisches Algenwachstum beseitigt und/oder die Ausbildung neuen Algenwachstums behindert oder vollständig unterdrückt werden kann, wenn Gewässer der angegebenen Art mit den Mitteln der Erfindung - die der Einfachheit halber im folgenden als "mineralisches Wirkstoffgemisch" bezeichnet werden - behandelt werden. An einem gegebenenfalls bestehenden Fischbesatz treten dabei keine Schäden auf.

Die feinteiligen mineralischen Komponenten werden bevorzugt gemeinsam z.B. in Form einer Mischung dem zu behandelnden Wasser zugesetzt und in einer ersten Ausführungsform zweck mäßigerweise darin verteilt und darin belassen. In einer anderen Ausführungsform kann absatzweise oder kontinuierlich ein Wasserteilstrom abgezogen und dann mit dem Gemisch der mineralischen Komponenten in innige Berührung gebracht werden. Es kann zweckmäßig sein, anschließend den so behandelten Wasserteilstrom wieder von den mineralischen Komponenten abzutrennen und bevorzugt mit dem Rest Wasser wieder zu vereinigen. Die beiden hier geschilderten grundlegenden Ausführungsformen können auch miteinander verbunden werden.

Gemäß der zuerst geschilderten Ausführungsform ist es möglich, das feinteilige Mineralstoffgemisch dem zu behandelnden Wasser oder einem Anteil hiervon einfach zuzusetzen und mit dem Wasser vorzugsweise in einer ersten Verfahrensstufe innig zu ver mischen, dann aber das Gewässer wieder sich selbst zu überlassen. Das erfindungsgemäße Mineralstoffgemisch sinkt bei dieser Form des Einsatzes langsam zu Boden, entfaltet dabei eine Reinigungswirkung und behält aber auch weiterhin erstaunlicherweise über einen beachtlichen Zeitraum seine Reinigungswirkung bei - auch wenn keine erneute Durchmischung des zu pflegenden Wassers mit dem auf den Boden abgesunkene Mineralstoffmaterial vorgenommen wird.

In einer Modifikation dieser Ausführungsform kann es sogar zweckmäßig sein, die Wirkstoffe gewissermaßen in der Art eines so ruhenden Filters beispielsweise am Boden eines Fischaquariums ortsfixiert festzuhalten. Die erfindungsgemäß mineralische Wirkstoffmischung kann dementsprechend beispielsweise dem Sand beigesetzt werden, der der Abdeckung des Aquarienbodens dient. Die in der Aquaristik übliche Belüftung und/oder Wasserumwälzung und die damit ausgelöste Wasserbewegung im Wassergesamtvolumen reicht offensichtlich aus, immer wieder hinreichenden Kontakt des Wassers mit dem ortsfixierten mineralischen Wirkstoffgemisch auszulösen, so daß auf diese Weise das Algenwachstum im Aquarium wirkungsvoll unterdrückt werden kann.

In einer anderen Ausführungsform der Erfindung wird die ortsfeste Fixierung des mineralischen Wirkstoffgemisches außerhalb der Hauptmasse des zu pflegenden Wassers vorgesehen, wobei dann absatzweise und/oder kontinuierlich Wasserteilmengen durch dieses ortsfixierte Filterbett geleitet und hier mit dem mineralischen Wirkstoffgemisch der Erfindung in derart innigem Kontakt gebracht werden, daß die gewünschte Reinigung und Reinerhaltung über lange Zeiträume sichergestellt ist.

Durch diese vielgestaltigen Möglichkeiten des Einsatzes wird die Handhabung und Anpassung beim Einsatz der erfindungsgemäßen mineralischen Wirkstoffgemische wesentlich erleichtert. Konkrete Anwendungsformen sind beispielsweise wie folgt:

Auf dem Gebiet der Aquaristik können die Mineralstoffe als Streumittel - beispielsweise auch als Zumischung zum Fischfutter - eingesetzt werden, um eine Vergrünung des Wassers zu bekämpfen. Möglich ist aber auch die Zumischung zum Aquariensand, der seinerseits als Streumittel eingesetzt werden kann. Wird das Aquarienwasser in konventioneller Weise über Filter umgepumpt ist die Zugabe der erfindungsgemäßen Wirkstoffmischung und ihre Fixierung im Zusammenhang mit dem konventionellen Filter möglich. So kann beispielsweise eine Zumischung zur Filterwatte und/oder anderen Filtermaterialien in Betracht kommen. Möglich ist weiterhin der Einsatz der Mineralstoffe in wasserdurchlässigen beispielsweise kissenartigen Verpackungen, die in das Filter eingelegt werden, so daß das umgepumpte Wasser diese durchströmen muß.

Vergleichbare Anwendungsformen ergeben sich für Garten-und Zierteiche. Auch hier kann das erfindungsgemäße Mineralstoffgemisch als Streumittel unmittelbar eingestreut werden oder aber in gärtnerische Wasserkreisläufe ortsfest fixiert werden. In Betracht kommt hier beispielsweise das Gebiet der Springbrunnentechnik aber auch die Reinerhaltung von Schwimmbädern mit ihrer bekannten Filtertechnik.

Ein bereits bestehender Wandbewuchs in Wasserreservoiren der genannten Art läßt sich allerdings im allgemeinen durch die erfindungsgemäße Behandlung nicht beseitigen. Es ist dementsprechend zweckmäßig, mit der das Algenwachstum verhindernden Pflege des Wassers so rechtzeitig zu beginnen, daß sich noch kein oder kein substanzieller Wandbewuchs ausgebildet hat. Im Gegensatz hierzu werden die im Wasser aufgeschlämmten und darin floatenden Anteile des Algenwachstums durch die Zugabe der erfindungsgemäßen mineralischen Wirkstoffmischung entfernt. Die völlige Klärung auch bereits stark kontaminierter auf diese Weise ist durchaus möglich.

Nach einer bevorzugten Ausführungsform der Erfindung werden die mineralischen Hilfsstoffe vor ihrem Einsatz in einer beschränkten Menge Wasser aufgeschlämmt. Es kann dabei zweckmäßig sein, die beiden Hilfsstoffe Zeolith und Calciumhydroxid zunächst seperat mit Wasser aufzuschlämmen und erst kurz vor der gemeinsamen Anwendung in dem gewünschten Mengenverhältnis miteinander zu vermischen. Bei der ortsfesten Fixierung des Wirkstoffgemisches kann es aber insbesondere auch zweckmäßig sein, das pulvrige Gemisch der beiden Wirkstoffbestandteile als solches herzustellen und dann beispielsweise in dem Filter anzubringen. Möglich ist auch die gleichzeitige Zudosierung der separat hergestellten Wirkstoffsuspensionen zu dem zu behandelnden Wasser, vorausgesetzt daß eine hinreichende Durchmischung sichergestellt ist.

Wie bereits in der genannten älteren internationalen Patentanmeldung angegeben, tritt eine Interaktion mit dem Wasser bereits bei Raumtemperatur ein. Das gilt auch für die hier betroffene Lehre des erfindungsgemäßen Handelns, so daß eine zusätzliche Temperaturbehandlung im allgemeinen nicht erforderlich ist.

Ionenaustauschender Zeolith und Calciumhydroxid werden im Sinne der erfindungsgemäßen Lehre üblicherweise in Mengenverhältnissen (Gewichtsteile) von etwa 50 : 1 bis etwa 1 : 1 eingesetzt, wobei der Bereich von etwa 20 : 1 bis 5 : 1 bevorzugt sein kann. In der Praxis sind gute Ergebnisse mit Mengenverhältnissen im Bereich von etwa 10 Gewichtsteilen des ionenaustauschenden Zeoliths auf ein Gewichtsteil Calciumhydroxids erhalten worden.

Die zur Wasserbehandlung benutzten Mengen des mineralischen Wirkstoffgemisches liegen vorzugsweise in Mengen bis zu höchstens etwa 1 Gewichtsprozent der mineralischen Komponenten - bezogen auf das zu behandelnde Gesamtwasser. Im allgemeinen werden befriedigende Ergebnisse mit bedeutend geringeren Mengen der mineralischen Komponenten erzielt, so wird in besonders bevorzugten Ausführungsformen die Menge der mineralischen Komponenten auf höchstens etwa 0,1 Gewichtsprozent und insbesondere auf nicht mehr als etwa 0,05 Gewichtsprozent beschränkt - wiederum bezogen auf das Gesamtwasser. Gute und langanhaltende Effekte der Wasserpflege sind beispielsweise bei Zusatzmengen der mineralischen Komponenten im Bereich von etwa 0,01 bis 0,03 Gewichtsprozent - bezogen auf Gesamtwasser - erhalten worden.

Zum Einsatz im erfindungsgemäßen Verfahren benutzt man im einfachsten Fall die pulverförmigen Stoffe. Eine leichtere Handhabung insbesondere eine bessere Schüttfähiggkei und das Vermeiden von Stäuben wird beim Einsatz von abriebfesten Agglomeraten erreicht, die im Kontakt mit Wasser leicht zerfallen. Wäßrige Pasten von Calciumhydroxid beziehungsweise ionenaustauschendem Zeolith sind ebenfalls als Ausgangsformen zur Bereitung der erfindungsgemäß eingesetzten Hilfsstoffe geeignet.

Als feinteilige Teilchengrößen werden im erfindungsgemäßen Sinne insbesondere entsprechende Werte bis etwa 100 $\mu$m, insbesondere unterhalb 50 $\mu$m verstanden, bestimmt an dem in Wasser suspendierten Feststoff. Als ionenaustauschende Zeolithe kommen insbesondere solche in Betracht, die wenigstens 50 mg CaO/g des als wasserfrei angenommenen Zeoliths innerhalb 10 Minuten austauschen. Bevorzugt ist die Verwendung des Zeolith NaA, der heute als Phosphataustauschstoff in Textilwaschmitteln in weitestem Umfang Verwendung findet.

Durch die Behandlung des Wassers im erfindungsgemäßen Sinne kann eine pH-Wertsverschiebung in dem schwach alkalischen Bereich eintreten. Im allgemeinen stört das nicht, gegebenenfalls ist eine pH-Wert-Absenkung in konventioneller Weise leicht zu erreichen. Geeignet ist beispielsweise die Begasung mit Kohlendioxid oder einem kohlendioxidhaltigem Gasgemisch.

Beispiel

4 Aquarienbecken einer Größe von jeweils 10 Liter werden mit Trinkwasser gefüllt und mit jeweils 10 Zebrabarben - tägliche Fütterung - besetzt. Diese Fischaquarien werden in bekannter Form ohne Filter über zwei Monate betrieben. Es bildet sich in allen Fällen ein starker Algen-Wandbewuchs aus, gleichzeitig bildet sich in den 4 Becken eine dichte Algentrübung.

Anschließend werden diese 4 Becken wie folgt behandelt:

Becken A: Keine Zugabe von Wirkstoffen, Kontrollprobe

Becken B: Eine wäßrige Paste aus 2,2 g Zeolith NaA und 0,2 g Calciumhydroxid wird in 100 ml destilliertem Wasser aufgerührt und diese Suspension in das 10 l Füllvolumen enthaltende Becken eingerührt. Die im Becken befindlichen Fische werden während dieses Arbeitsganges im Becken belassen. Sie werden nicht geschädigt. Das Umlauffilter des Beckens wird für den Zeitraum von 1 Stunde abgeschaltet, danach wieder in Betrieb gesetzt.

Becken C: Es wird eine Behandlung wie bei "Becken B" vor genommen, jedoch im weiteren Versuchsverlauf das Umlauffilter nicht wieder eingeschaltet.

Becken D: Die gleiche Menge an wäßriger Paste aus Zeolith NaA und Calciumhydroxid wie im Falle der Becken B beziehungsweise Becken C wird hier nicht dem Wasser zugegeben, sondern direkt in den Umlauffilter gelagert. Die Ausspülung des feinteiligen mineralischen Materials wird durch hinreichende Wattelagen verhindert.

Nach 24 Stunden ist die Trübung in den erfindungsgemäß behandelten Becken vllig verschwunden und tritt auch noch nach Ablauf mehrerer Wochen nicht wieder auf. Während des gleichen Zeitraumes wird die Trübung im unbehandelten Becken A eher noch stärker.

## Ansprüche

1. Verwendung von feinteiligem ionenaustauschendem Natriumzeolith gemeinsam mit feinteiligem Calciumhydroxid (mineralische Komponenten) zur Reinigung und/oder Reinhaltung von stehenden, bewegten und/oder mäßig durchströmten Gewässern, die insbesondere dem Zutritt von Licht und gegebenenfalls Luft ausgesetzt sind.

2. Ausführungsform nach Anspruch 1 dadurch gekennzeichnet, daß die Behandlung im Rahmen der Aquaristik, der Pflege von Fischteichen, der Reinigung und/oder Reinerhaltung von Gartenteichen, Schwimmbädern und anderen künstlichen Gewässern oder bei der Pflege von natürlichen stehenden oder mäßig durchströmten Gewässern eingesetzt wird.

3. Ausführungsform nach Ansprüchen 1 und 2 dadurch gekennzeichnet, daß die feinteiligen mineralischen Komponenten, bevorzugt gemeinsam z.B. in Form einer Mischung, dem zu behandelnden Wasser zugesetzt, zweckmäßigerweise darin verteilt und darin belassen werden und/oder das absatzweise oder kontinuierlich ein Wasserteilstrom abgezogen und mit dem Gemisch der mineralischen Komponenten in innige Berührung gebracht, davon abgetrennt und bevorzugt mit dem Rest Wasser wieder vereinigt wird.

4. Ausführungsform nach Ansprüchen 1 bis 3 dadurch gekennzeichnet, daß die mineralischen Komponenten in Form einer wäßrigen Suspension in das zu behandelnde Wasser eingetragen und vorzugsweise darin belassen werden und/oder das in dem zu behandelnden Wasser angeordnete ruhende oder von dem Wasser durchströmte Filterelemente mit einem ortsfixierten innigen Gemisch der mineralischen Komponenten ausgerüstet werden.

5. Ausführungsform nach Ansprüchen 1 bis 4 zur Beseitigung und/oder Verhinderung unerwünschten Algenwuchses.

6. Ausführungsform nach Ansprüchen 1 bis 5 dadurch gekennzeichnet, daß als ionenaustauschender Zeolith Zeolith NaA eingesetzt wird.

7. Ausführungsform nach Ansprüchen 1 bis 6 dadurch gekennzeichnet, daß Zeolith und Calciumhydroxid in Mengenverhältnissen von 50 : 1 bis 1 : 1, vorzugsweise in Mengenverhältnissen von 20 : 1 bis 5 : 1 - jeweils bestimmt als Gewichtsteile - eingesetzt werden.

8. Ausführungsform nach Ansprüchen 1 bis 7 dadurch gekennzeichnet, daß das Gemisch der mineralischen Komponenten in Mengen bis zu 0,1 Gewichtsprozent, vorzugsweise in Mengen nicht über 0,05 Gewichtsprozent, z.B. in Mengen von etwa 0,01 bis 0,03 Gewichtsprozent - jeweils bezogen auf das zu behandelnde Gesamtwasser - verwendet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,P<br>X | WO-A-8 701 965 (HENKEL KOMMANDITGESELLSCHAFT AUF AKTIEN)(Publ. 09-04-1987)<br>* Ansprüche 1,4,5 * & EP-A-0 238 579 (Publ. 30-09-1987)<br>--- | 1-8 | C 02 F 1/42<br>B 01 J 39/14 |
| X | DE-A-2 926 606 (HENKEL KOMMANDITGESELLSCHAFT AUF AKTIEN)<br>* Anspruch 1; Seite 3, Zeilen 22,23,25; Seite 6, Zeilen 23-26 *<br>----- | 1-8 | |

RECHERCHIERTE SACHGEBIETE (Int. Cl.4)

C 02 F
B 01 J

Der vorliegende Recherchenbericht wurde für alle Patentansprüche erstellt

| Recherchenort | Abschlußdatum der Recherche | Prüfer |
|---|---|---|
| DEN HAAG | 06-07-1988 | OSWALD |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

·····································

& : Mitglied der gleichen Patentfamilie, übereinstimmendes Dokument

EPO FORM 1503 03.82 (P0403)